Europäisches Patentamt

European Patent Office

Office européen des brevets

(11) Publication number: **0 085 475**
**B1**

(12) **EUROPEAN PATENT SPECIFICATION**

(45) Date of publication of patent specification: **15.05.85**

(21) Application number: **83300067.2**

(22) Date of filing: **06.01.83**

(51) Int. Cl.⁴: **F 24 D 3/00, F 24 D 11/00, F 24 B 9/04**

(54) **Hot water installation.**

(30) Priority: **21.01.82 GB 8201741**

(43) Date of publication of application:
**10.08.83 Bulletin 83/32**

(45) Publication of the grant of the patent:
**15.05.85 Bulletin 85/20**

(84) Designated Contracting States:
**BE DE FR NL SE**

(56) References cited:
**CH-A- 614 033**
**FR-A-2 477 685**
**US-A-4 139 152**

(73) Proprietor: **Baker, John**
**19 La Salle Terrace Downpatrick**
**Co. Down Northern Ireland (GB)**

(72) Inventor: **Baker, John**
**19 La Salle Terrace Downpatrick**
**Co. Down Northern Ireland (GB)**

(74) Representative: **Daunton, Derek**
**Barlow, Gillett & Percival 94, Market Street**
**Manchester M1 1PJ (GB)**

Courier Press, Leamington Spa, England.

## Description

This invention concerns indirect hot water installations.

Practical difficulties can arise in instances where it is desired to include, in an indirect hot water installation (e.g. a central heating installation), both a gravity-type circuit and a forced-circulation circuit. An installation of this type is known from US—A—4 139 152.

One commonly-known gravity-type circuit conventionally comprises a so-called back boiler installed, for instance, in the fireback of a solid fuel fireplace so as to be heated by fuel burning in the fireplace. Flow and return pipes extend generally in an upward direction from the back boiler and lead to a heat exchange of an indirect hot water storage cylinder. In operation, the water in the back boiler is heated and as it warms up it rises within the boiler and, consequently, causes corresponding rising movement of the water in the flow pipe and into the storage cylinder, with consequent migration of cooler water downwards from the storage tank through the return pipe to the boiler. So long as heat is applied to the back boiler, this circulation continues, with progressive increase in the water temperature in the storage cylinder.

Forced-circulation hot water circuits, in general, comprise a boiler (which may be heated by any suitable fuel) to which are connected respective flow and return pipes which extend to one or more heat-exchange devices, which may be central heating radiators and/or a heat-exchange coil accommodated within a hot water storage tank, a pump being provided, for causing positive (or forced) circulation from the boiler to and through the heat-exchange devices and back to the boiler.

Practical experience from the interconnection of gravity-type circuits with forced-circulation circuits, for example where central heating is installed in a dwelling house in which a back-boiler indirect type hot water system is already in existance, indicates that often each circuit will interfere with the proper operation of the other, and satisfactory operation cannot be achieved without the provision of at least some sort of manual or other control for balancing the two circuits. In the worst case is may be necessary to decouple the two circuits so that they can only be used independently.

An object of the present invention is to develop an arrangement whereby one or more gravity-type circuits can be combined with one or more forced-circulation type circuits, in one and the same installation, in such a way that each of said circuits can be used, as desired, either alone or with the other (or any of the others) without the need to make provision for manual or other control.

With this object in view, the present invention provides an indirect hot water installation in the form of a combination comprising a gravity circuit, including a boiler, and a forced-circulation circuit, including a respective boiler, characterised in that respective flow and return pipes from said boilers couple the two circuits by being connected to a coupling manifold, the flow pipe and the return pipe from the gravity circuit boiler being connected respectively at high and low levels to said manifold, whilst the flow pipe and the return pipe from the forced-circulation circuit boiler are also connected to said manifold, heat exchange means of said installation being connected, for hot water to circulate therethrough, to the coupling manifold and/or between the feed and return pipes of the forced-circulation circuit.

The flow pipe and the return pipe from the forced-circulation circuit boiler are generally, but not necessarily, mounted conversely with respect to the pipes from the gravity circuit boiler, that is at respective low and high levels on said manifold.

In an installation particularly (but not exclusively) suitable for domestic premises, the heat exchange means conveniently comprises an indirect water heating coil disposed within a hot water storage cylinder from which water may be drawn as desired. In such an installation, the coupling manifold may conveniently be in the form of a secondary tank having flat top and bottom surfaces for the hot water storage tank to rest thereon. This secondary tank may be, for example, round or square when viewed in plan. The indirect water heating coil may then conveniently be connected to the coupling manifold for hot water from the latter to circulate through the said coil.

The heat exchange means may, of course, additionally or alternatively include central heating radiators and these are preferably connected between the feed and return pipes of the forced-circulation circuit in parallel with one another and in parallel with the coupling manifold.

The installation of the invention may, if desired, include one or more further gravity circuits; in other words, the coupling manifold may serve to couple two or more boiler systems to a pumped central heating system.

Similarly the system may, if desired, include one or more further forced-circulation circuits; thus the coupling manifold may serve to couple one or more boiler systems to two or more pumped central heating systems.

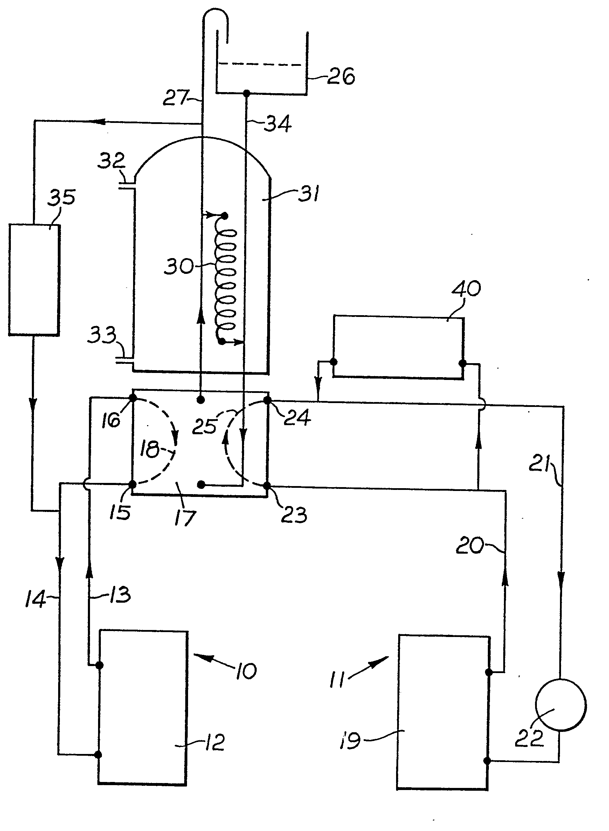

The invention will be described further, by way of example, with reference to the accompanying drawing in which the single figure is a schematic diagram illustrating a practical embodiment of the hot water installation of the invention.

The illustrated hot water installation of the invention comprises a gravity circuit which is indicated generally by the reference numeral 10 and a forced circulation circuit which is indicated generally by the reference numeral 11. The gravity circuit 10 comprises a back boiler 12 from which lead a flow pipe 13 and a return pipe 14, these connecting with the boiler 12 respectively at high and low levels. It is to be understood that the drawing is purely diagrammatic, so that the positions of the connections of these pipes to the back boiler 12 do not necessarily, in practice, correspond precisely to those shown in the drawing. The same applies to the connections, yet to be described, of the other components of the installation, and also to the shapes and the relative dimensions of the illustrated components.

As is usual with conventional gravity circuits, the back boiler 12 is installed at the rear of a solid-fuel fired firegrate (not shown) in a living room (e.g. a downstairs living room) in a domestic dwelling house, so that water contained in such boiler 12 will be heated by fuel burning in the firegate. With increase in temperature, the water rises so as to tend to flow upwards in the feed pipe 13, with cooler water flowing downwards into the boiler 12 by way of the return pipe 14. In a conventional gravity circuit, the feed pipe 13 and return pipe 14 would be connected at their upper ends to a heat exchanger of a hot water storage cylinder. This storage cylinder may, for instance, be installed in an airing cupboard or other suitable location which would benefit from the elevated temperature of the storage cylinder.

In contrast to the conventional proposals, the gravity circuit in the illustrated installation has the upper ends of the feed pipe 13 and return pipe 14 connected respectively to a high level port 16 and a low level port 15 in the sidewalls of a coupling manifold 17. This coupling manifold 17 is in the form of a closed tank which is generally circular in plan but is flat at its top and bottom. Accordingly, when the gravity circuit 10 is in operation, the temperature of water in the coupling manifold 17 is progressively increased, and circulation occurs through the manifold 17 as has been indicated schematically at 18.

The forced circulation circuit 11 comprises a water boiler 19 which is heated by any suitable fuel and has a flow pipe 20 leading from a high level and a return pipe 21 leading thereto at a low level, an impeller or pump 22 being provided in the return pipe 21. The upper end of the flow pipe 20 connects with the coupling manifold 17 at a low level port 23 and the upper end of the return pipe 21 connects with the coupling manifold 17 at a high level port 24, this being the reverse arrangement in comparison with the connection of the feed and return pipes 13, 14. When the boiler 19 and pump 22 are in operation hot water is circulated positively through the coupling manifold 17 as indicated at 25.

A substantially constant head of water is maintained in the two circuits just described by means of a supply tank 26 disposed at the highest level in the entire installation, and connected to the coupling manifold 17 by the cold feed pipe 34. An expansion pipe 27 connected to the manifold 17 extends upwards to an outlet into the tank 26 so as to keep the overall quantity of water in the two circuits substantially constant.

The two circuits may be employed either singly, or together to supply hot water to heat exchange means, and two forms thereof have been illustrated in the drawing.

The first heat exchange means is in the form of a heat exchange coil 30 accommodated within a hot water storage cylinder 31 from which hot water can be drawn by way, for example, of outlet 32 and to which replacement water can be fed by way of inlet 33. The two ends of this coil 30 are connected to the coupling manifold 17, respectively at a high and a low level so that hot water from said manifold 17 will supply heat to the water in the storage cylinder 31. These connections have been achieved in the illustrated case, for convenience, by connecting the ends of the coil 30 respectively to the expansion pipe 27 and the pipe 34 leading from the tank 26 to the manifold 17, but of course, these connections may be made independently of the pipes 27, 34. The storage cylinder 31 conveniently sits directly upon and is supported by the coupling manifold 17, so that there can be direct heat conduction therebetween.

The second heat exchange means comprises a plurality of central heating radiators, of which one only is illustrated at 40 in the drawing. As shown, each such radiator 40 is connected between the flow pipe 20 and the return pipe 21 of the forced circulation circuit 11 so as to be in parallel with the coupling manifold 17.

From the foregoing description, it will readily be appreciated that the installation can be operated by use of the back boiler 12, or by use of the forced-circulation boiler 19, or with both such boilers in use, without the need for any specific manual or other control operations having to be carried out. If only the back boiler is operating, the hot water in the coupling manifold is able to circulate by gravity through the coil 30, and also through the radiators. The same applies with the forced circulation boiler 19 from which the hot water is positively taken through the radiators, the coupling manifold 17 and the coil 30.

A heat leak radiator 35 should be fitted between the return pipe 14 to the gravity circulation boiler 12 and the expansion pipe 27, as illustrated, in order to ensure good gravity circulation at all times.

The invention is not confined to the precise details of the foregoing example and variations may be made thereto, as desired. For instance, in the forced circulation circuit the impeller or pump may be provided in the flow pipe instead of in the return pipe and these pipes need not be connected to the manifold in the reverse manner to the pipes from the gravity circuit. Moreover, the installation could serve only to power central heating radiators, or only a hot water system. Also, of course, the coupling manifold can be adapted for further circuits, either gravity circuits or forced-circulation circuits, or both, to be connected thereto.

## Claims

1. An indirect hot water installation in the form of a combination comprising a gravity circuit (10), including a boiler (12), and a forced-circulation circuit (11), including a respective boiler (19), characterised in that respective flow (13, 20) and return pipes (14, 21) from said boilers (12, 19) couple the two circuits by being connected to a coupling manifold (17), the flow pipe (13) and the return pipe (14) from the gravity circuit boiler being connected respectively at high and low levels to said manifold (17), whilst the flow pipe (20) and the return pipe (21) from the forced-circulation circuit boiler are also connected to said manifold, heat exchange means (30, 40) of said installation being connected, for hot water to circulate therethrough, to the coupling manifold (17) and/or between the feed and return pipes of the forced-circulation circuit.

2. A hot water installation as claimed in claim 1 wherein the flow pipe (20) and the return pipe (21) from the forced-circulation circuit boiler (19) are mounted conversely with respect to the pipes from the gravity circuit boiler (12), that is to say at respective low and high levels on said manifold (17).

3. A hot water installation as claimed in claim 1 or 2 wherein the heat exchange means comprises an indirect water heating coil (30) disposed within a hot water storage cylinder (31) from which water may be drawn as desired.

4. A hot water installation as claimed in claim 3 wherein the coupling manifold (17) is in the form of a secondary tank having flat top and bottom surfaces for the hot water storage cylinder (31) to rest thereon.

5. A hot water installation as claimed in claim 3 or 4 wherein the indirect water heating coil (30) is connected to the coupling manifold (17) for hot water from the latter to circulate through the said coil.

6. A hot water installation as claimed in any preceding claim wherein the heat exchange means include central heating radiators (40) connected between the feed (20) and return (21) pipes of the forced-circulation circuit in parallel with one another and in parallel with the coupling manifold (17).

## Patentansprüche

1. Indirekte Warmwasseranlage in Form einer Kombination aus einem Schwerkraftkreis (10), einschleißlich eines Kessels (12), und einem Zwangsumlaufkreis (11), einschließlich eines entsprechenden Kessels (19), dadurch gekennzeichnet, daß entsprechende Vorlaufleitungen (13, 20) und Rücklaufleitungen (14, 21) dieser Kessel (12, 19) die beiden Kreise verbinden, indem sie mit einem Rohrverzweiger (17) verbunden sind, wobei die Vorlaufleitung (13) und die Rücklaufleitung (14) des Kessels des Schwerkraftkreises auf hohen bzw. niedrigen Ebenen mit dem Rohrverzweiger (17) verbunden sind, während die Vorlaufleitung (20) und die Rücklaufleitung (21) des Kessels des Zwangsumlaufkreises ebenfalls mit dem Rohrverzweiger verbunden sind, wobei Wärmetauscher (30, 40) der Anlage mit dem Rohrverzweiger (17) und/oder zwischen der Vorlauf- und Rücklaufleitungen des Zwangsumlaufkreises verbunden sind, damit warmes Wasser durch die Wärmetauscher zirkulieren kann.

2. Warmwasseranlage nach Anspruch 1, dadurch gekennzeichnet, daß die Vorlaufleitung (20) und die Rücklaufleitung (21) des Kessels (19) des Zwangsumlaufkreises in bezug auf die Leitungen des Kessels (12) des Schwerkraftkreises umgekehrt angeordnet sind, d.h. auf entsprechenden niedrigen und hohen Ebenen am Rohrverzweiger (17).

3. Warmwasseranlage nach Anspruch 1 oder 2, dadurch gekennzeichnet, daß der Wärmetauscher eine indirekte Wasserheizschlange (30) umfaßt, die innerhalb eines zylinderförmigen Warmwasserspeichers (31) angeordnet ist, aus dem Wasser nach Wunsch entnommen werden kann.

4. Warmwasseranlage nach Anspruch 3, dadurch gekennzeichnet, daß der Rohrverzweiger (17) in Form eines Nebentanks vorgesehen ist, der flache Ober- und Unterseiten aufweist, damit der zylinderförmige Warmwasserspeicher (31) darauf gelagert werden kann.

5. Warmwasseranlage nach Anspruch 3 oder 4, dadurch gekennzeichnet, daß die indirekte Wasserheizschlange (30) mit dem Rohrverzweiger (17) verbunden ist, damit warmes Wasser aus diesem durch die Schlange zirkulieren kann.

6. Warmwasseranlage nach einem der vorgenannten Ansprüche, dadurch gekennzeichent, daß die Wärmetauscher Zentralheizungsradiatoren (40) einschließen, die zwischen den Vorlaufleitungen (20) und Rücklaufleitungen (21) des Zwangsumlaufkreises parallel miteinander und parallel mit dem Rohrverzweiger (17) verbunden sind.

## Revendications

1. Une installation d'eau chaude à chauffage indirect sous la forme d'une combinaison compremant un circuit par gravité (10) comportant une chaudière (12), et un circuit à circulation forcée (11) comportant également une chaudière (19), installation caractérisé en ce que les conduites d'écoulement (13, 20) et de retour (14, 21) respectives desdites chaudières (12, 19) raccordent les deux circuits en étant reliées à un conduit de raccordement (17), la conduite d'écoulement (13) et la conduite de retour (14) de la chaudière du circuit par gravité étant reliées respectivement à des niveaux haut et bas dudit conduit (17) tandis que la conduite d'écoulement (20) et la conduite de retour (21) de la chaudière du circuit à circulation forcée sont également reliées audit conduit, des moyens d'échange de chaleur (30, 40) de ladite installation étant reliés, pour permettre la circulation d'eau chaude à travers eux, au conduit de raccordement (17) et/ou entre les conduites d'alimentation et de retour du circuit à circulation forcée.

2. Une installation d'eau chaude selon la revendication 1 dans laquelle la conduite d'écoulement (20) et la conduite de retour (21) de la chaudière (19) du circuit de circulation forcée sont montées inversées par rapport aux conduites de la chaudière (12) du circuit par gravité, c'est à dire à des niveaux respectivement bas et haut dudit conduit (17).

3. Une installation d'eau chaude selon la revendication 1 ou 2, dans laquelle les moyens d'échange de chaleur comprennent un serpentin (30) de chauffage indirect d'eau, disposé dans un cylindre (31) de stockage d'eau chaude duguel de l'eau peut être tirée si désiré.

4. Une installation d'eau chaude selon la revendication 3, dans laquelle le conduit de raccordement (17) est sous la forme d'un réservoir secondaire ayant des surfaces plates au sommet et à la base pour que le cylindre (31) de stockage d'eau chaude repose sur celui-ci.

5. Une installation d'eau chaude selon la revendication 3 ou 4, dans laquelle le serpentin (30) de chauffage indirect d'eau est relié au conduit de raccordement (17) pour que l'eau chaude provenant de ce dernier puisse circuler à travers ledit serpentin.

6. Une installation d'eau chaude selon l'une quelconque des revendications précédentes dans laquelle les moyens d'échange de chaleur comportent des radiateurs de chauffage central (40) connectés entre les conduites d'alimentation (20) et de retour (21) du circuit à circulation forcée en parallèle l'un avec l'autre et en parallèle avec le conduit de raccordement (17).

0 085 475

1